# EUROPÄISCHE PATENTSCHRIFT

(11) **EP 3 237 647 B1**
(45) Veröffentlichungstag und Bekanntmachung des Hinweises auf die Patenterteilung: **26.09.2018**
(21) Anmeldenummer: 15808216.4
(22) Anmeldetag: 11.12.2015
(51) Int. Cl.: C22C 21/02, B23K 35/00, B32B 15/01

(54) **SI-PRIMÄRPARTIKELFREIE ALUMINIUMLOTLEGIERUNG UND VERFAHREN ZU DEREN HERSTELLUNG**
ALUMINIUM SOLDER ALLOY FREE FROM PRIMARY SI PARTICLES AND METHOD FOR PRODUCTION THEREOF
ALLIAGE DE BRASAGE À BASE D'ALUMINIUM DÉPOURVU DE PARTICULES DE SI PRIMAIRES ET SON PROCÉDÉ DE PRODUCTION

(30) Priorität: 23.12.2014 EP 14199939
(43) Veröffentlichungstag der Anmeldung: 01.11.2017
(73) Patentinhaber: Hydro Aluminium Rolled Products GmbH, 41515 Grevenbroich (DE)
(72) Erfinder: JANSSEN, Hartmut, 40724 Hilden (DE); KUHNKE, Katrin, 42719 Solingen (DE); DROSTE, Werner, 53113 Bonn (DE); GRÜN, Gerd-Ulrich, 53844 Troisdorf (DE)
(74) Vertreter: Cohausz & Florack
(86) Internationale Anmeldenummer: PCT/EP2015/079399
(87) Internationale Veröffentlichungsnummer: WO 2016/102209

(56) Entgegenhaltungen:
- EP-A1- 2 479 296
- SRITHARAN T ET AL: "Influence of titanium to boron ratio on the ability to grain refine aluminium-silicon alloys", JOURNAL OF MATERIALS PROCESSING TECHNOLOGY, ELSEVIER, NL, Bd. 63, Nr. 1-3, 1. Januar 1997 (1997-01-01), Seiten 585-589, XP026545378, ISSN: 0924-0136, DOI: 10.1016/S0924-0136(96)02688-X [gefunden am 1997-01-01]
- MAHMOUDI MORTEZA ET AL: "Simultaneous grain refining and modification of 356 aluminium alloy using aluminium base master alloys containing strontium , titanium and boron", LIGHT METALS, TMS, MINERALS, METALS AND MATERIALS SOCIETY / ALUMINIUM COMMITTEE, US, 1. Januar 2005 (2005-01-01), Seiten 1129-1133, XP009099414, ISSN: 0147-0809
- M.M. MAKHLOUF ET AL: "The aluminum-silicon eutectic reaction: mechanisms and crystallography", JOURNAL OF LIGHT METALS, Bd. 1, Nr. 4, 1. November 2001 (2001-11-01), Seiten 199-218, XP055247779, ISSN: 1471-5317, DOI: 10.1016/S1471-5317(02)00003-2

## Beschreibung

Die Erfindung betrifft einen Barren aus einer Aluminiumlotlegierung, mit folgenden Anteilen als Legierungsbestandteile in Gewichtsprozent:

| | | |
|---|---|---|
| 4,5 % ≤ | Si | ≤ 12 %, |

und optional mit einem oder mehreren der folgenden Anteile als Legierungsbestandteile in Gewichtsprozent:

| | |
|---|---|
| Ti | ≤ 0,2 %, |
| Fe | ≤ 0,8 %, |
| Cu | ≤ 0,3 %, |
| Mn | ≤ 0,10 %, |
| Mg | ≤ 2,0 %, |
| Zn | ≤ 0,20 %, |
| Cr | ≤ 0,05 %, |

Rest Aluminium und unvermeidbare Verunreinigungen, einzeln maximal 0,05 Gew.-%, in Summe maximal 0,15 Gew.-%. Unter anderem abhängig von dem verwendeten Lotverfahren beträgt der Mg-Gehalt der Aluminiumlotlegierung der Erfindung optional 1,0 Gew.-% bis 2,0 Gew.-%, maximal 0,4 Gew.-%, bevorzugt maximal 0,2 Gew.-% oder maximal 0,1 Gew.-%. Die Aluminiumlotlegierung kann auch im Wesentlichen Mg-frei sein, d.h. Mg nur in Spuren enthalten und einen Mg-Gehalt von weniger als 100 ppm oder weniger als 50 ppm aufweisen. Weiterhin betrifft die Erfindung ein Aluminiumlegierungsprodukt zumindest teilweise bestehend aus einer Aluminiumlotlegierung sowie ein Verfahren zur Herstellung einer Aluminiumlotlegierung.

Aluminiumlotlegierungen mit Si-Gehalten von 4,5 Gew.-% bis 12 Gew.-%, sogenannte untereutektische Aluminium-Silizium-Legierungen, werden aufgrund des relativ niedrigen Schmelzpunktes vor allem zum Löten von Bauteilen, vorzugsweise Aluminiumbauteilen genutzt. Das Aluminiumlot bestehend aus einer AlSi-Aluminiumlegierung kann beispielsweise in Form von Lötfolien aber auch durch einen Verbundwerkstoff, welcher eine AlSi-Aluminiumlegierungsschicht aufweist, bereitgestellt werden. Insbesondere wenn eine Vielzahl von Lötstellen zu löten sind und die Bauteile eine komplexe Form, wie beispielsweise Wärmetauscher sie aufweisen, werden häufig eine AlSi-Aluminiumlegierungsschicht aufweisende Bänder, Bleche oder Halbzeuge eingesetzt. Wärmetauscher von Kraftfahrzeugen werden häufig unter Verwendung eines Aluminiumlots gelötet. Die Lotschichten sind im Allgemeinen sehr dünn ausgebildet, um einerseits Material einzusparen und andererseits die beim Verbundwerkstoff vorhandenen Eigenschaften des Kernwerkstoffs nicht negativ zu beeinflussen. Aufgrund der zunehmenden Verringerung der Dicke der Lotschichten und des Kernwerkstoffs, werden an das Gefüge der Lotschichten erhöhte Anforderungen gestellt.

Aus dem Formgussbereich ist beispielsweise bekannt, veredelnde Elemente wie Strontium und Natrium oder feinende Elemente wie Antimon in die Legierung aufzunehmen, um das eutektische Gefüge bzw. die eutektischen Gefügeanteile zu beeinflussen. Diese veredelnden oder feinenden Legierungselemente kommen allerdings beim Einsatz in Aluminiumloten nicht in Frage, da sie den Lötprozess stören können und das Recycling erschweren. Bei der konventionellen Herstellung von AlSi-Aluminiumlegierungen wird zunächst ein Hüttenaluminium gemeinsam mit Silizium in einem Schmelz- bzw. Gießofen geschmolzen und andere Legierungselemente zulegiert. Im Formgussbereich ist es bekannt, beispielsweise Vorlegierungen aus AlB in Si-haltigen Gusslegierungen zur Kornfeinung der primären alpha-Aluminiumphase zuzugeben.

Anders als im Formgussbereich werden Barren durch Gießen, insbesondere DC-casting, hergestellt, um diese beispielsweise durch Walzen oder Sägen zu Bändern oder Blechen weiterzuverarbeiten. In der Regel durchläuft der Barrenwerkstoff nach der Herstellung des Barrens also einen weiteren Massivumformschritt, beispielsweise bei einem anschließenden Walzen. Dies ist im Formgussbereich nicht vorgesehen, da im Formgussbereich in der Regel Endform ähnliche Teile gegossen werden.

Aluminiumlotlegierungen werden in der Regel zu Walzbarren weiterverarbeitet und anschließend aus ihnen hergestellte Bleche auf andere Walzbarren aufplattiert. Denkbar ist aber auch hier das Aussägen von Plattierblechen aus den Barren und das Walzplattieren gemeinsam mit einem Kernbarren. Im Walzbarrenbereich werden in der Regel Aluminiumtitanborid (AlTiB)-Vorlegierungen, beispielsweise AlTiB-Drähte zur Kornfeinung verwendet und der Legierung im schmelzflüssigen Zustand zugeführt. Die Bor-Gehalte liegen dabei typischerweise im Bereich von 5 bis 30 ppm.

Hieraus resultiert ein Gefüge, welches für die AlSi-Aluminiumlegierung für den Einsatz als Lotschicht bisher ausreichte. Allerdings wurde festgestellt, dass einerseits der Lötvorgang bei extrem dünnen Aluminiumlotschichten nicht ausreichend prozesssicher durchgeführt werden konnte. Andererseits traten nach dem Löten Anschmelzungen und Erosion bzw. Löcher in den Bauteilen auf. Hiervon betroffen sind besonders Bauteile mit dünnen Wandstärken.

Es hat sich nämlich herausgestellt, dass nicht nur in übereutektischen, sondern auch in untereutektischen Al-Si-Legierungen primäre Siliziumpartikel in geringen Mengen vorhanden sind. Primäre Si-Partikel sind Partikel, die aus reinem Silizium bestehen und in kristalliner Form in konventionellen Aluminiumlegierungen vorhanden sind. Es hat sich gezeigt, dass die Lötprobleme insbesondere durch primäre Si-Partikel hervorgerufen werden, insbesondere wenn diese je nach Anwendung eine Größe von mehr als 20 bzw. 10 µm aufweisen. Während des Lötvorganges führen primäre Si-Partikel allerdings zu einem lokalen Überangebot an Si in der Lotschicht, wodurch der Kernwerkstoff ebenfalls lokal in der Umgebung der primären Si-Partikel aufgeschmolzen wird. Dies führt dann zur Erosion ("Durchbrennen") oder Ausbildung eines Loches in dem mit einer Aluminiumlotschicht überzogenen Produkt während des Lötens.

Dieses Problem wird beispielsweise in der europäischen Patentanmeldung 2 479 296 A1, welche gattungsgemäße Aluminiumlegierungen betrifft, beschrieben. Es wird dort vorgeschlagen, den Phosphor- und Bor-Gehalt der Aluminium-Silizium-Legierung jeweils auf 10 ppm zu begrenzen. Es hat sich gezeigt, dass dadurch primäre Si-Partikel mit einer Größe von mehr als 10 µm vermieden werden können. Dadurch kann der Lötvorgang prozesssicher durchgeführt werden und es kommt nicht zu einer lokalen Aufschmelzung des Aluminiumlegierungskernwerkstoffes.

Nachteilig an diesem Ansatz ist jedoch, dass das Aluminium-Ausgangsmaterial bei der Herstellung relativ strengen Restriktionen der Begleitelemente wie etwa Phosphor und Bor unterliegt. Dadurch ist man einer vergleichsweise kostenintensiven Herstellung ausgesetzt.

Alternativ ist ebenfalls möglich, besonders reine Ausgangsmaterialien für Aluminium und Silizium zu verwenden, um ein Auftreten von primären Si-Partikeln zu reduzieren oder unterbinden. Aufgrund der hohen Kosten für die Bereitstellung derart reiner Materialien stellt auch diese Alternative allerdings eine vergleichsweise aufwendige und kostspielige Lösung dar.

Hiervon ausgehend liegt der vorliegenden Erfindung die Aufgabe zugrunde, einen Barren aus einer AlSi-Aluminiumlotlegierung zur Herstellung von Aluminiumlegierungsprodukten zur Verfügung zu stellen, welcher die Herstellung von Aluminiumlegierungsprodukten für einen verbesserten Lötprozess ermöglicht und gleichzeitig eine kostengünstige Produktion erlaubt. Darüber hinaus liegt der Erfindung die Aufgabe zugrunde, ein Aluminiumlegierungsprodukt sowie ein Verfahren zur Herstellung eines Barrens aus der Aluminiumlotlegierung vorzuschlagen.

Gemäß einer ersten Lehre der vorliegenden Erfindung wird die aufgezeigte Aufgabe durch eine gattungsgemäße Aluminiumlegierung gelöst, wobei zusätzlich Bor als Legierungsbestandteil vorgesehen ist, wobei Bor derart zulegiert ist, dass der Bor-Gehalt mindestens 100 ppm beträgt und die Aluminiumlegierung frei von primären Si-Partikeln mit einer Größe von mehr als 20 µm, insbesondere 10 µm, ist.

Die Erfinder haben erkannt, dass es möglich ist, durch einen im Vergleich zum Bor-Gehalt von 5 bis 30 ppm der konventionellen Legierungen erhöhten Bor-Gehalt von mindestens 100 ppm das Auftreten von primären Si-Partikel mit einer Größe von mehr als 20 µm zu unterbinden. Dabei wird Bor derart zulegiert, dass die Aluminiumlegierung frei von primären Si-Partikeln mit einer Größe von mehr als 20 µm, insbesondere 10 µm, ist. Dieser neue Ansatz wendet sich also von dem bisher im Stand der Technik verfolgten Ansatz, den Bor-Gehalt zu begrenzen, ab. Vielmehr wird der Bor-Gehalt derart erhöht, dass die Aluminiumlegierung ein deutlich feineres Korngefüge und frei von primären Si-Partikeln mit einer Größe von mehr als 20 µm ist. Dabei kann die Einstellung des spezifischen Bor-Gehalts im konkreten Fall beispielsweise von weiteren Legierungsbestandteilen abhängen.

Gleichzeitig wird durch die Borzugabe mit Mindestgehalten von 100 ppm zum einen eine kornfeinende Wirkung des alpha-Aluminiums erzielt und zum anderen sind auch die eutektischen Si-Phasen deutlich feiner ausgebildet als im Stand der Technik.

Im Ergebnis kann ein Lötvorgang prozesssicherer durchgeführt und eine Lötverbindung prozesssicher bereitgestellt werden, da es nicht zu einer lokalen Aufschmelzung des Aluminiumlegierungskernwerkstoffes kommt. Dies gilt insbesondere für Aluminiumlotschichten und Aluminiumlegierungskernwerkstoffe, die besonders dünn ausgebildet sind, beispielsweise im Bereich von 15 µm bis 30 µm für die Lotschicht und 50 µm bis 120 µm für den Kernwerkstoff liegen, da der Effekt der Lochbildung aufgrund vorhandener primärer Si-Partikel mit einer Größe von mehr als 20 µm bei diesen Schichtdicken verstärkt auftritt.

Andererseits kann die erfindungsgemäße Aluminiumlegierung aber im Vergleich zu bisherigen Aluminiumlegierungen besonders kostengünstig hergestellt werden. Es müssen keine hochreinen Komponenten verwendet werden. Beispielsweise kann von einem Aluminium 99,85 in Verbindung mit metallurgischen Silizium ausgegangen werden, da man deutlich weniger Restriktionen durch die Begleitelemente des Aluminium-Ausgangsmaterials unterliegt. Es hat sich gezeigt, dass sich die Reduzierung der Kosten auf einen Faktor von bis zu 10 belaufen kann.

In Hinblick auf Anwendungen, bei denen das Ergebnis bereits durch geringe Mengen an primären Si-Partikeln negativ beeinflusst wird, weist die erfindungsgemäße Aluminiumlotlegierung gemäß einer bevorzugten Ausführungsform gar keine primären Si-Partikel mehr auf. So kann ein besonders prozesssicheres Ergebnis bei der Verwendung der Aluminiumlotlegierung erreicht werden.
Bevorzugt weist die Aluminiumlotlegierung einen Phosphorgehalt von maximal 30 ppm, maximal 20 ppm oder maximal 10 ppm auf. Es hat sich gezeigt, dass die Entstehung von primären Si-Partikeln mit einer Größe von mehr als 20 µm bzw. mehr als 10 µm hierdurch noch prozesssicherer unterdrückt werden kann.

Bevorzugt entspricht die Aluminiumlotlegierung abgesehen von den nicht vorhandenen primären Si-Partikeln, welche eine Größe von mehr 20 µm aufweisen, einer der Legierungsspezifikationen vom Typ AA 4043, AA 4343, AA 4045, AA 4044 oder AA 4104. Die spezifischen Legierungstypen werden in Kombination mit unterschiedlichen Aluminiumlegierungen als Aluminiumlote in ganz spezifischen Anwendungsgebieten verwendet.

Die Aluminiumlegierung vom Typ AA 4043 weist beispielsweise einen Si-Gehalt von 4,5 bis 6,0 Gew.-%, einen Fe-Gehalt von maximal 0,8 Gew.-%, einen Cu-Gehalt von maximal 0,30 Gew.-%, einen Mn-Gehalt von maximal 0,05 Gew.-%, einen Mg-Gehalt von maximal 0,1 Gew.-%, einen Zn-Gehalt von maximal 0,10 Gew.-% sowie einen Ti-Gehalt von maximal 0,20 Gew.-% auf. Typische Anwendungen der Legierung AA 4043 liegen in der Verwendung als Aluminiumlot bevorzugt in Kombination mit Flussmitteln.

Die Mg-freie Aluminiumlegierung AA 4343 weist beispielsweise einen Si-Gehalt von 6,8 bis 8,2 Gew.-%, einen Fe-Gehalt von maximal 0,8 Gew.-%, einen Cu-Gehalt von maximal 0,25 Gew.-%, einen Mn-Gehalt von maximal 0,10 Gew.-% und einen Zn-Gehalt von maximal 0,20 Gew.-% auf. Die Aluminiumlegierung vom Typ AA 4343 wird bevorzugt in Kombination mit oder ohne Flussmitteln zum Löten in Schutzgasatmosphäre bzw. im CAB-Verfahren (Controlled Atmosphere Brazing) verwendet.

Die mit einem höheren Si-Gehalt versehene Aluminiumlegierung vom Typ AA 4045 enthält 9,0 bis 11,0 Gew.-% Si, maximal 0,8 Gew.-% Fe, maximal 0,30 Gew.-% Cu, maximal 0,05 Gew.-% Mn, maximal 0,05 Gew.-% Mg, maximal 0,10 Gew.-% Zn und maximal 0,20 Gew.-% Ti. Diese Aluminiumlegierung wird ebenfalls bevorzugt in Kombination mit oder ohne Flussmitteln zum Löten in Schutzgasatmosphäre bzw. im CAB-Verfahren verwendet.

Die Mg-freie Aluminiumlegierung vom Typ AA 4044 enthält 7,8 Gew.-% bis 9,2 Gew.-% Si, maximal 0,8 Gew.-% Fe, maximal 0,25 Gew.-% Cu, maximal 0,10 Gew.-% Mn und maximal 0,20 Gew.-% Zn. Sie wird ebenfalls für das CAB-Lötverfahren verwendet.

Schließlich enthält die Legierung vom Typ AA 4104 9,0 bis 10,5 Gew.-% Si, maximal 0,8 Gew.-% Fe, maximal 0,25 Gew.-% Cu, maximal 0,1 Gew.-% Mn, 1,0 bis 2,0 Gew.-% Mg und maximal 0,05 Gew.-% Zn, 0,02 bis 0,20 Gew.-% Bi. Dieser Legierungstyp wird bevorzugt als Lot im Vakuumlöten eingesetzt.

Alle fünf Legierungstypen enthalten Verunreinigungen in einem Gehalt von maximal 0,05 Gew.-% einzeln und in der Summe maximal 0,15 Gew.-%. Die genannten Aluminiumlotlegierungen eignen sich insbesondere zur Verwendung als Lotschichten in Kombination mit unterschiedlichen Legierungstypen. Allen Legierungen ist gemein, dass diese bei konventioneller Herstellung primäre Si-Partikel aufweisen, wohingegen die erfindungsgemäßen Aluminiumlotlegierungen aufgrund des Borgehaltes von mindestens 100 ppm frei von primären Si-Partikeln mit einer Größe von mehr als 20 µm, insbesondere 10 µm, sind. Bevorzugt ist die erfindungsgemäße Aluminiumlegierung darüber hinaus vollständig frei von primären Si-Partikeln, so dass besonders dünne Aluminiumlotschichten mit der erfindungsgemäßen Aluminiumlegierung bereitgestellt werden können, welche prozesssichere Lotverbindungen zur Verfügung stellen.

Gemäß einer ersten Ausgestaltung der erfindungsgemäßen Aluminiumlotlegierung weist die Aluminiumlegierung einen Si-Gehalt von 6 % ≤ Si ≤ 11 % auf. Es hat sich gezeigt, dass der Einsatz der Erfindung im Bereich der Legierungsspezifikationen vom Typ AA 4343, AA 4045, AA 4044 oder AA 4104 besonders vorteilhaft ist.

Eine besonders zuverlässige Vermeidung von primären Si-Partikeln oberhalb einer bestimmten Größe kann gemäß einer weiteren Ausgestaltung des erfindungsgemäßen Aluminiumlegierung dadurch erreicht werden, dass der Bor-Gehalt ≥ 140 ppm, vorzugsweise ≥ 220 ppm, und/oder ≤ 1000 ppm, vorzugsweise ≤ 800 ppm, beträgt. Es hat sich gezeigt, dass der Bor-Gehalt vor allem innerhalb dieser Grenzen derart auf einen Gehalt eingestellt werden kann, sodass die Aluminiumlegierung frei von primären Si-Partikeln mit einer Größe von mehr als 20 µm ist und im Ergebnis die Bildung von primären Si-Partikeln in der Aluminiumlegierung noch besser unterdrückt werden kann. Gleichzeitig wird eine kornfeinende Wirkung des alpha-Aluminiums erzielt, wodurch die Zugabe weiterer Kornfeinungsmittel entfällt. Dieser Effekt hat sich ab einer Bor-Menge von 140 ppm bzw. bei mehr als 220 ppm eingestellt. Vorzugweise beträgt der Borgehalt daher mindestens 250 ppm, insbesondere mindestens 300 ppm als vorteilhaft erwiesen.

Als eine besonders zuverlässig Möglichkeit zur Ermittlung des notwendigen Bor-Gehalts zur Vermeidung von primären Si-Partikeln hat sich bewährt, wenn gemäß einer weiteren Ausgestaltung der erfindungsgemäßen Aluminiumlegierung Bor in Abhängigkeit eines oder mehrerer anderer Legierungsbestandteile zulegiert ist. Aufgrund der Wechselwirkung der Legierungsbestandteile untereinander hat sich herausgestellt, dass die Bildung von primären Si-Partikeln besonders zuverlässig unterdrückt werden kann, wenn der Bor-Gehalt in Abhängigkeit von einem oder mehreren weiteren Legierungsbestandteilen bestimmt bzw. zulegiert ist.

Dabei hat sich gemäß einer besonders vorteilhaften Ausgestaltung der erfindungsgemäßen Aluminiumlegierung gezeigt, dass eine optimale Unterdrückung primärer Si-Partikel möglich ist, wenn Bor in Abhängigkeit des Ti-, Zr- und/oder V-Gehalts zulegiert ist, insbesondere derart, dass der Bor-Gehalt mindestens der 1-fachen, der mindestens der 1,5-fachen, mindestens der 2,5-fachen oder mindestens der 3-fachen Menge der Summe des Ti-, Zr- und V und Cr-Gehalts entspricht. Diese Abhängigkeit kann dazu genutzt werden, den Borgehalt sicher auf einen Wert von mindestens 100 ppm im Walzbarren einzustellen. So kann beispielsweise eine zusätzliche Menge an Bor für die Bor-Zugabe zur Schmelze in Abhängigkeit des Ti-, Zr-, V- und Cr-Gehalts der Ausgangsschmelze ermittelt werden, um die Bildung von Boriden mit den genannten Legierungsbestandteilen und deren Absetzen im Ofen zu berücksichtigen. Der Effekt der Kornfeinung und die Vermeidung von Si-Primärpartikeln kann so effektiv sichergestellt werden. Der Bor-Gehalt kann dann bevorzugt auf mindestens 100 ppm, 140 ppm, 220 ppm, und/oder maximal 1000 ppm bzw. 800 ppm eingestellt werden.

Hieraus folgt zudem, dass es vorteilhaft ist, dass die Summe aus Ti-, Zr-, V- und Cr-Gehalts auf maximal 500 ppm, insbesondere maximal 400 ppm, und/oder mindestens 50 ppm, insbesondere mindestens 100 ppm, beträgt. Die Gehalte an Ti-, Zr- oder V betragen bevorzugt maximal 400 ppm, besonders bevorzugt maximal 300 ppm, um negative Effekte auf die Gießbarkeit der Legierung, die Walzbarkeit des Barrens oder bei Zr die Recyclingfähigkeit zu verringern.

Gemäß einer zweiten Lehre der vorliegenden Erfindung wird die oben aufgezeigte Aufgabe durch ein Aluminiumlegierungsprodukt zumindest teilweise bestehend aus einer erfindungsgemäßen Aluminiumlotlegierung gelöst. Entsprechende Aluminiumlegierungsprodukte können extrem dünne Lotschichten aufweisen und dennoch sehr gut lötbar sein.

Eine besonders einfache Bereitstellung der Aluminiumlegierungsprodukte kann dadurch erreicht werden, dass das Aluminiumlegierungsprodukt ein Band ist und mindestens eine weitere Schicht aus Aluminium oder einer weiteren Aluminiumlegierung aufweist. Das bandförmige Aluminiumlegierungsprodukt kann eine sehr dünne Aluminiumlotschicht bestehend aus der erfindungsgemäßen Aluminiumlegierung aufweisen und dennoch besonders gute Löteigenschaften besitzen. Das Band kann ohne weiteres in eine Vielzahl von Blechen vereinzelt werden, welche dann weiteren Arbeitsschritten unterworfen werden, um lötbare Halbzeuge oder fertige Bauteile herzustellen.

Bevorzugt wird das Band durch ein Walzplattieren oder ein Verbundgießen hergestellt. Dabei gehen beide Aluminiumlegierungsschichten eine stoffschlüssige Verbindung an ihrer Grenzfläche zueinander ein. Beide Verfahren können wirtschaftlich zur Erzeugung von Aluminiumverbundwerkstoffen eingesetzt werden, welche eine Schicht aus einer erfindungsgemäßen Aluminiumlegierung als Aluminiumlotschicht aufweisen.

Da mit der erfindungsgemäßen Aluminiumlegierung eine besonders prozesssicher herstellbare Lotverbindung bereitgestellt werden kann, ist es vorteilhaft, wenn das Aluminiumlegierungsprodukt als ein Teil eines gelöteten Bauteils, insbesondere eines Wärmetauschers ausgebildet ist. Wie bereits zuvor ausgeführt, sind Lötverbindungen ein wichtiger Bestandteil bei unterschiedlichen Bauteilen, insbesondere bei Wärmetauschern von Kraftfahrzeugen. Das erfindungsgemäße Aluminiumlegierungsprodukt ist auf besondere Art und Weise geeignet, prozesssicher Lötverbindungen bereitzustellen.

Gemäß einer dritten Lehre der vorliegenden Erfindung wird die zuvor hergeleitete Aufgabe auch durch einen Barren bestehend aus einer erfindungsgemäßen Aluminiumlegierung zur Herstellung eines erfindungsgemäßen Aluminiumlegierungsprodukts gelöst. Aufgrund der Verwendung einer erfindungsgemäßen Aluminiumlegierung weist der gefräste Barren keine primären Si-Partikel mit einer Größe von mehr als 20 µm auf.

Barren werden in der Regel zur Herstellung von Aluminiumlegierungsprodukten durch Walzen des Barrens verwendet. Der Barren kann aber auch zur Herstellung von Plattierblechen durch Sägen von Schalen aus dem Barren verwendet werden.

Die Anzahl der primären Si-Partikel wird dabei an einer senkrecht zur Gießrichtung herausgeschnittenen Scheibe des gefrästen Barrens jeweils in der Barrenmitte an der Oberfläche, in einer Tiefe von einem Viertel der Dicke des Barrens und im Zentrum des Barrens auf einer Fläche von mindestens 600 mm² bestimmt. Der erfindungsgemäße Barren ist daher besonders geeignet, zu einem Plattierblech weiterverarbeitet zu werden oder zu einer Lötfolie. Die Plattierbleche können sowohl aus dem Barren gesägt oder durch Walzen des Barrens erhalten werden. Das Plattierblech wird üblicherweise auf den Kernwerkstoff bzw. Kernbarren aufgebracht und entsprechend walzplattiert, um einen lötbaren Aluminiumverbundwerkstoff bereitzustellen. Im Ergebnis kann der erfindungsgemäße Barren zur Herstellung von besonders gut lötfähigen Aluminiumlegierungsprodukten verwendet werden.

Bevorzugt ist der erfindungsgemäße Barren frei von primären Si-Partikeln mit einer Größe von mehr als 10 µm. Weiterhin bevorzugt ist der erfindungsgemäße Barren frei von primären Si-Partikeln, d.h. in einer aus dem gefrästen Barren senkrecht zur Gießrichtung des Barrens heraus getrennten Scheibe kann in der Mitte dieser Scheibe in Flächenbereichen von mindestens 600 mm² an der Oberfläche, in einer Höhe von einem Viertel der Barrendicke und im Zentrum des Barrens keine primären Si-Partikel ermittelt werden. Die primären Si-Partikel werden an polierten Schliffen unter dem Mikroskop innerhalb der entsprechenden Fläche ausgezählt.

Erfindungsgemäße Barren weisen, wie bereits ausgeführt, keine primären Si-Partikel mit einer Größe von mehr als 20 µm, insbesondere 10 µm, vorzugsweise gar keine primären Si-Partikel auf. Die erfindungsgemäßen Barren unterscheiden sich damit deutlich von konventionell hergestellten Barren zur Herstellung von Aluminiumlegierungsprodukten mit erhöhtem Bor-Gehalt.

Gemäß einer vierten Lehre der vorliegenden Erfindung wird die oben aufgezeigte Aufgabe dadurch gelöst, dass ein Verfahren zur Herstellung einer erfindungsgemäßen Aluminiumlegierung bereitgestellt wird, bei welchem
- Reinaluminium mit unvermeidbaren Verunreinigungen einzeln maximal 0,05 Gew.-%, in Summe maximal 0,15 Gew.-% in einem Schmelzofen geschmolzen wird,
- optional eins oder mehrere der folgenden Anteile

| | |
|---|---|
| Ti | ≤ 0,2 %, |
| Fe | ≤ 0,8 %, |
| Cu | ≤ 0,3 %, |
| Mn | ≤ 0,10 %, |
| Mg | ≤ 2,0 %, |
| Zn | ≤ 0,20 %, |
| Cr | ≤ 0,05 %, |

als weitere Legierungsbestandteile in Gewichtsprozent im Schmelzofen zulegiert werden oder bereits zumindest teilweise im Reinaluminium enthalten sind,
- im Schmelzofen Silizium zulegiert wird bis ein Si-Gehalt von 4,5 Gew.-% bis 12 Gew.-% der Aluminiumlegierung erreicht ist und
- wobei Bor derart zulegiert wird, dass der Bor-Gehalt mindestens 100 ppm beträgt und die erstarrte Aluminiumlegierung frei von primären Si-Partikeln mit einer Größe von mehr als 20 µm, insbesondere 10 µm, ist.

Es wurde herausgefunden, dass nicht nur bei einer stark restriktiven Begrenzung der Begleitelemente die Bildung von primären Si-Partikeln unterdrückt werden kann, sondern auch bei wesentlich höheren Bor-Gehalten als üblich. Dadurch kann ohne eine kostenintensive Restriktion der Begleitelemente eine Bildung primärer Si-Partikel mit einer Größe von mehr als 20 µm, insbesondere 10 µm, unterbunden werden. Bei dem erfindungsgemäßen Verfahren wird der Bor-Gehalt auf mindestens 100 ppm eingestellt, so dass die erstarrte Aluminiumlegierung frei von primären Si-Partikeln mit einer Größe von mehr als 20 µm, insbesondere 10 µm, ist.

Besonders vorteilhaft wird gemäß einer Ausgestaltung des erfindungsgemäßen Verfahrens auf die Zugabe weiterer Kornfeinungsmittel, insbesondere Titanboride aufweisende Kornfeinungsmittel, verzichtet. Aufgrund der Zugabe an Bor wird bereits eine kornfeinende Wirkung des alpha-Aluminiums erzielt, wodurch die Zugabe anderer Kornfeinungsmittel, wie etwa AlTiB-Draht entfallen kann. Wie bereits erwähnt, sind zudem die eutektischen Si-Phasen deutlich feiner ausgebildet.

In einer bevorzugten Ausgestaltung des erfindungsgemäßen Verfahrens wird der B-Gehalt auf ≥ 140 ppm, vorzugsweise ≥ 220 ppm, und/oder ≤ 1000 ppm, vorzugsweise ≤ 800 ppm, eingestellt. Wie bereits ausgeführt, wird dadurch eine weitere Steigerung der Prozesssicherheit bei der Herstellung von primär Si-Partikel freien Aluminiumlegierungen erreicht, da der Bor-Gehalt im gegossenen Walzbarren sicher so eingestellt werden kann, dass eine weitere Reduzierung der Größe der primären Si-Partikel sowie eine vollständig primäre Si-Partikel freie Aluminiumlegierungen bereitgestellt werden kann.

Wie ebenfalls bereits bezüglich der Aluminiumlegierung ausgeführt, wird Bor gemäß einer Ausgestaltung des erfindungsgemäßen Verfahrens bevorzugt in Abhängigkeit eines oder mehrerer anderer Legierungsbestandteile zulegiert. Zur optimalen Unterdrückung primärer Si-Partikel wurde dabei als besonders vorteilhaft erkannt, wenn Bor in Abhängigkeit des Ti-, Zr-, V- und Cr-Gehalts zulegiert wird, insbesondere derart, dass der Bor-Gehalt mindestens der 1-fachen, der 1,5-fachen, der 2,5-fachen oder mindestens der 3-fachen Menge der Summe des Ti-, Zr-, V- und Cr-Gehalts der Ausgangsschmelze entspricht. Bevorzugt kann das Verhältnis des Borgehalts zur Summe der Gehalte von Ti, Zr, V und Cr mindestens 5 oder mindestens 10 betragen.

Wie oben ausgeführt ist es vorteilhaft, wenn die Summe aus Ti-, Zr-, V- und Cr-Gehalts auf maximal 500 ppm, insbesondere maximal 400 ppm, und/oder mindestens 50 ppm, insbesondere mindestens 100 ppm, beträgt. Die Gehalte an Ti-, Zr- oder V betragen bevorzugt maximal 400 ppm, besonders bevorzugt maximal 300 ppm.

Wird gemäß einer weiteren Ausgestaltung des erfindungsgemäßen Verfahrens eine Aluminiumlotlegierung vom Typ AA4xxx, insbesondere Typ AA 4043, AA 4343, AA 4045, AA 4044 oder AA 4104 hergestellt, können die Eigenschaften der mit dem Verfahren hergestellten Aluminiumlegierung optimal ausgenutzt werden, um einen verbesserten Lötprozess sowohl beim CAB-Löten als auch beim Vakuumlöten zu gewährleisten.

Wie ebenfalls zuvor ausgeführt ist, es vorteilhaft, wenn die im Verfahren verwendete Aluminiumlotlegierung einen Phosphorgehalt von maximal 30 ppm, maximal 20 ppm oder maximal 10 ppm aufweist.

Für weitere Ausgestaltungen des erfindungsgemäßen Verfahrens, des erfindungsgemäßen Barrens und des erfindungsgemäßen Aluminiumlegierungsprodukts wird auf die Ausführungen zu den vorteilhaften Ausgestaltungen der erfindungsgemäßen Aluminiumlegierung verwiesen.

Die Erfindung wird im Weiteren anhand eines Ausführungsbeispiels und in Verbindung mit der Zeichnung näher erläutert. In der Zeichnung zeigt
- Fig. 1: in einer Schnittansicht einen gefrästen Gießbarren mit eingezeichneten Flächen zur Bestimmung der Anzahl der primären Si-Partikel,
- Fig. 2 bis 10b: mikroskopisch vergrößerte Schnittfläche von Barren bestehend aus konventionellen und erfindungsgemäßen Aluminiumlotlegierungen.

Zunächst wurde eine konventionell hergestellte Aluminiumlotlegierung untersucht. Die Gehalte der Legierungsbestandteile der Probe sind in Tabelle 1 in Gewichtsprozent bzw. ppm angegeben.

Wie aus der Tabelle 1 zu erkennen ist, weist die konventionell hergestellte Vergleichslegierung L1 einen Gehalt von etwa 10 % Silizium und 11 ppm Bor auf. Die weiteren Bestandteile der Vergleichslegierung L1 können der Tabelle 1 entnommen werden.

**Tabelle 1**

| Probe | | Si | Fe | Cu | Mn | Mg | Ti | Cr | Zn | B | P |
|---|---|---|---|---|---|---|---|---|---|---|---|
| L1 | SdT | 10,2 | 0,07 | <0,001 | <0,005 | <0,005 | 50ppm | <0,001 | 0,005 | 11ppm | 7ppm |

Mit der Vergleichslegierung L1 wurde wir folgt verfahren. Zunächst wurde die Legierung auf Basis von einem Standard Hüttenaluminium und Silizium in Gießereiqualität gemeinsam unter Verwendung von Kornfeinungsmitteln in Form von AlTiB-Stäben konventionell hergestellt, sodass ein typischer Bor-Gehalt unterhalb von 30 ppm erreicht wurde. Die Schmelztemperatur vor dem Gießen betrug etwa 750° C.

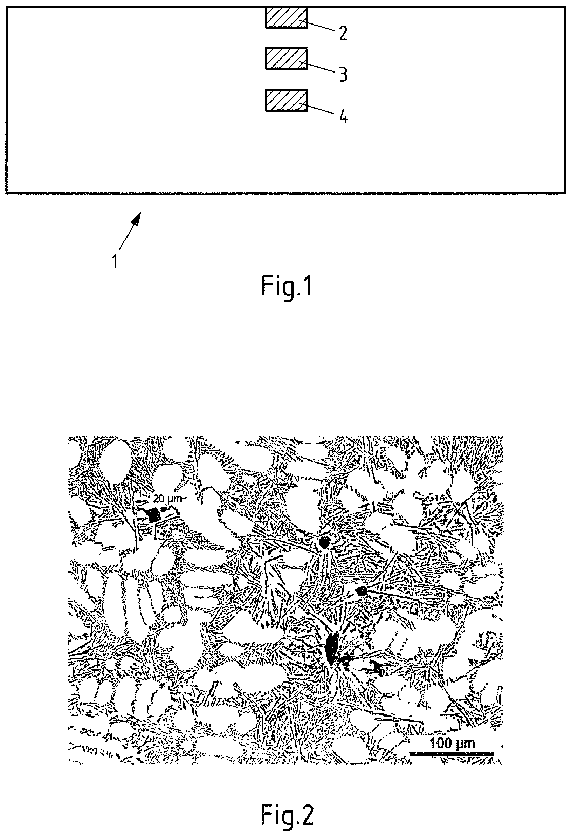

Der Barren im Gießformat 600 mm x 200 mm wurde gegossen und gefräst, d.h. die Randschale, welche bis etwa 20 mm dick ist, wurde entfernt. Aus dem so gefrästen Barren wurde eine wie in Figur 1 dargestellte Scheibe senkrecht zur Gießrichtung herausgetrennt. An drei verschiedenen Stellen, nämlich in der Mitte des Barrens an der Oberfläche 2, auf Höhe ein Viertel der Barrendicke 3 und im Zentrum des Barrens 4 sind Flächenausschnitte von 30 mm x 20 mm auf das Vorhandensein von primären Si-Partikeln untersucht worden.

Die Flächenausschnitte von 30 mm x 20 mm wurden an den genannten Stellen von der Barrenscheibe abgetrennt und in ein Epoxidharz eingebettet, um das Probenhandling zu erleichtern. Anschließend wurden die eingebetteten Proben zunächst manuell mit SiC-Papier und Schleifleinen bzw. -vlies mit einer Körnung von bis zu 2400 geschliffen. Die Dauer der Schleifprozesse betrug bei den verschiedenen Körnungen etwa 10 bis 20 s. Das anschließende halbautomatische Polieren erfolgte zunächst mit 6µm und anschließend mit 3µm polykristalliner Diamantsuspension für jeweils 8 bis 9 Minuten. Das Endpolieren erfolgte mit einer Oxid-Polier-Suspension mit einer Körnung von 0,25µm für etwa 2 bis 5 Minuten. Die so präparierten Schliffe wurden unter einem Auflichtmikroskop mit 100facher bis 200facher Vergrößerung ausgewertet.

Gleichzeitig wurden mit der Vergleichslegierung L1 unterschiedliche Fertigungsparameterstudien, beispielsweise unterschiedliche Abstehzeiten, mit oder ohne Argongasspülung, Änderung des Gasspülungsgemisches durchgeführt. Es zeigte sich, dass unabhängig von den zuletzt genannten Parametern der Schmelzebehandlung grobe primäre Si-Partikel in den Walzbarren vorhanden waren. Die Ergebnisse der Anzahl und der Größe der primären Si-Partikel der Vergleichslegierung L1 zeigt die Tabelle 2. An der Oberfläche zeigte sich eine Häufung der primären Si-Partikel mit einer Größe von bis zu 22 µm.

**Tabelle 2**

| Probe | Anzahl der primären Si-Partikel | | | Durchschnittl. Größe der primären Si-Partikel (µm) |
|---|---|---|---|---|
| | Oberfläche | 1/4 Barrendicke | Barrenzentrum | |
| L1 | 53 | 29 | 171 | 12 - 22 |

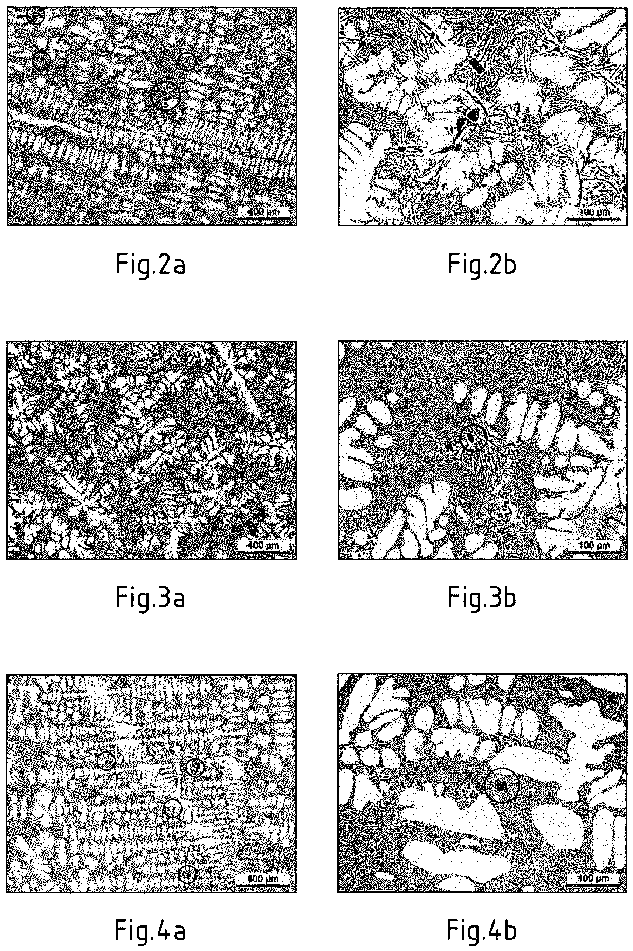

Figur 2 zeigt eine vergrößerte Ansicht der Schlifffläche eines Barrens aus dem Barrenzentrum aus der Vergleichslegierung L1. Im Schliff ist deutlich zu erkennen, dass grobe primäre Si-Partikel vorhanden sind, welche eine Größe von 20 µm und mehr aufweisen. Der in der Figur 2 dargestellte Flächenbereich stammt aus dem Zentrum des Barrens. Die vergrößerte Aufnahme in der Figur 2 hat eine Größe von etwa 500 µm x 375 µm.

Entsprechende Untersuchungen wurden an weiteren Ausführungsbeispielen durchgeführt. Die Zusammensetzung der Ausführungsbeispiele kann der Tabelle 3 entnommen werden. Die in Tabelle 3 angegebenen Versuchschargen wurden in einem kippbaren, gasbeheizten Tiegelofen mit einem Fassungsvermögen von etwa 800 kg erschmolzen. Bei allen Versuchschargen kamen handelsübliche Aluminium-Standardmasseln vom Typ Reinheitsgrad 99,85 sowie einstückiges Silizium für metallurgische Anwendungen mit einem Reinheitsgrad von 98 bis 99 % zur Anwendung. Die Ausgangslegierungen wurden bei etwa 800 °C erschmolzen und anschließend bei etwa 750 °C abgekrätzt. Nach einer Abstehzeit von ca. 10 Minuten wurde die Schmelze über ein kurzes Rinnensystem in einer Stranggießanlage ebenfalls in ein Walzbarrenformat von 600 mm x 200 mm im vertikalen Stranggießverfahren (DC-Casting) vergossen.

Bei den Versuchschargen mit Borzugabe erfolgte diese nach dem ersten Abkrätzen bei 750 °C unter Zugabe einer AlB5-Vorlegierung. Nach dem Auflösen der Vorlegierung in der Schmelze wurde die Schmelze erneut abgekrätzt und nach 10 Minuten Abstehzeit vergossen.

Die Zugabe des Bors erfolgte in mehreren Stufen. Ausgehend von einer Standardlegierung ohne Borzugabe wurde das Stranggießen unterbrochen, die Aluminium-Bor-Vorlegierung vom Typ AlB5 zulegiert, gerührt, abgekrätzt und nach 10 Minuten Abstehzeit erneut vergossen.

Bei der Borzugabe zeigte sich, dass ein Teil des Bors mit der in der Ausgangsschmelze vorhandenen Ti, V und Zr zum Teil Boride bildete, die sich im Ofen absetzten.

Bei den Versuchschargen bildeten die Vergleichslegierung von Versuch V1 die Ausgangslegierung zu den erfindungsgemäßen Aluminiumlegierungen V2, V3, V4. Die Vergleichslegierungen V5 und V8 bildeten die Ausgangslegierungen zu den erfindungsgemäßen Legierungen aus den Versuchen V6, V7 respektive V9. Deutlich ist in allen erfindungsgemäßen Legierungen zu erkennen, dass der Anteil an Ti, Zr, V zurückgeht aufgrund des Absetzens von Boride im Ofen.

In Tabelle 3 sind neben den Angaben der Anteile der Legierungsbestandteile in Gew.-% (außer Bor und Zr) auch die Summe der Legierungsbestandteile Ti, Zr, V und Cr angegeben sowie das Verhältnis des Gehaltes an Bor zu der Summe der genannten Legierungsbestandteile.

Die aus den Zusammensetzungen hergestellten Barren wurden analog dem Versuch L1 im Hinblick auf die Gefügestruktur der Aluminiumlegierung und das Vorhandensein von groben Siliziumpartikeln hin untersucht. Die Ergebnisse sind in den Figuren 2 bis 11 mit jeweils zwei Schliffansichten in verschiedenen Vergrößerungen dargestellt.

**Tabelle 3**

| **Versuch Nr** | | **Si** | **Fe** | **Cu** | **Mg** | **P** | **Ti** | **B (ppm)** | **V** | **Zr (ppm)** | **Cr** | **∑(Ti.Zr,V,Cr)** | **B/∑(Ti.,Zr,V,Cr)** |
|---|---|---|---|---|---|---|---|---|---|---|---|---|---|
| **V1** | Vgl. | 10 | 0,107 | 0,0012 | <0,005 | 0,0005 | 0,036 | 3 | 0,0097 | 4 | 0,001 | 0,0471 | 0,01 |
| **V2** | Erf. | 10 | 0,125 | 0,0012 | <0,005 | 0,0004 | 0,003 | 150 | 0,0011 | 2 | 0,001 | 0,0053 | 2,83 |
| **V3** | Vgl. | 10,1 | 0,122 | <0,001 | <0,005 | 0,0005 | 0,003 | 70 | 0,0062 | 3 | 0,001 | 0,0105 | 0,67 |
| **V4** | Erf. | 9,97 | 0,132 | <0,001 | <0,005 | 0,0006 | 0,003 | 270 | 0,001 | 2 | 0,001 | 0,0052 | 5,19 |
| **V5** | Vgl. | 9,93 | 0,085 | 0,0023 | 0,0013 | 0,0007 | 0,0032 | 6 | 0,0107 | 3 | 0,0006 | 0,0148 | 0,04 |
| **V6** | Vgl. | 10,06 | 0,085 | 0,0012 | 0,0017 | 0,0006 | 0,0024 | 84 | 0,0079 | 2 | 0,0006 | 0,0111 | 0,76 |
| **V7** | Erf. | 9,94 | 0,085 | 0,0014 | 0,0007 | 0,0006 | 0,0002 | 355 | 0,0006 | 1 | 0,0004 | 0,0013 | 27,31 |
| **V8** | Vgl. | 10 | 0,12 | 0,0014 | <0,005 | <0,0005 | 0,0059 | 29 | 0,0087 | 4 | 0,001 | 0,016 | 0,18 |
| **V9** | Erf. | 10 | 0,22 | 0,0016 | <0,005 | <0,0005 | 0,003 | 690 | 0,0022 | 2 | 0,001 | 0,0064 | 10,78 |

Die in Fig. 2 dargestellten Schliffbilder des Versuchs Nr. V1 entstammen einer Referenzaluminiumlegierung, welche ohne Zugabe von AlB5-Vorlegierungen hergestellt wurde. Der Bor-Gehalt beträgt 3 ppm. Die Schliffbilder a) und b) zeigen deutlich, dass der Barren zahlreiche primäre Si-Partikel mit einer Größe von etwa 30 µm und mehr aufweist. Der Barren hat ein grobes AlSi-Eutektikum und zeigt lange, unverzweigte Dendriten.

Fig. 3 zeigt in den Schliffbildern a) und b) der erfindungsgemäßen Aluminiumlegierung V2 nur noch wenige feine Si-Primärpartikel. Diese weisen eine Größe von weniger als 10 µm auf. Das AlSi-Eutektikum ist deutlich feiner ausgebildet als im Referenzversuch V1. Die Zugabe von Bor erfolgte hier durch Verwendung einer AlBS-Vorlegierung. Es wurden 200 ppm Bor zulegiert, so dass nach dem Abstehen im Ofen 150 ppm in der Gussprobe gemessen werden konnte. Das Verhältnis des Borgehaltes zur Summe der Ti, Zr, V und Cr-Gehalte beträgt bei Versuch Nr. V2 2,83. Die Dendriten sind kurz und verzweigt ausgebildet. Es wird davon ausgegangen, dass bereits ab einem Wert von 100 ppm der Einfluss von Bor auf die Ausbildung von primären Si-Partikeln ausreicht, so dass deren Größe maximal 20 µm beträgt. Entsprechende Zusammensetzungen aufweisende Aluminiumlotlegierungen sind besonders gut für die Bereitstellung sehr dünner Aluminiumlotschichten mit guten Löteigenschaften und geringer Neigung zu Lötfehlern geeignet.

Im Gegensatz zur erfindungsgemäßen Legierungen V2 zeigt Versuch Nr. V3 nach Zugabe von 100 ppm Bor einen Gehalt von 83 ppm Bor in der Gussprobe. Die Schliffbilder der Fig. 4 stammen aus einem mit der Aluminiumlegierung V3 gegossenen Barren. Vereinzelt sind noch primäre Si-Partikel mit einer Größe oberhalb von 20 µm zu erkennen. Das AlSi-Eutektikum ist aber bereits feiner ausgebildet als bei der Legierung V1 ohne Bor-Zugabe. Das Gefüge weist lange und unverzweigte Dendriten der primären Aluminiumphase auf.

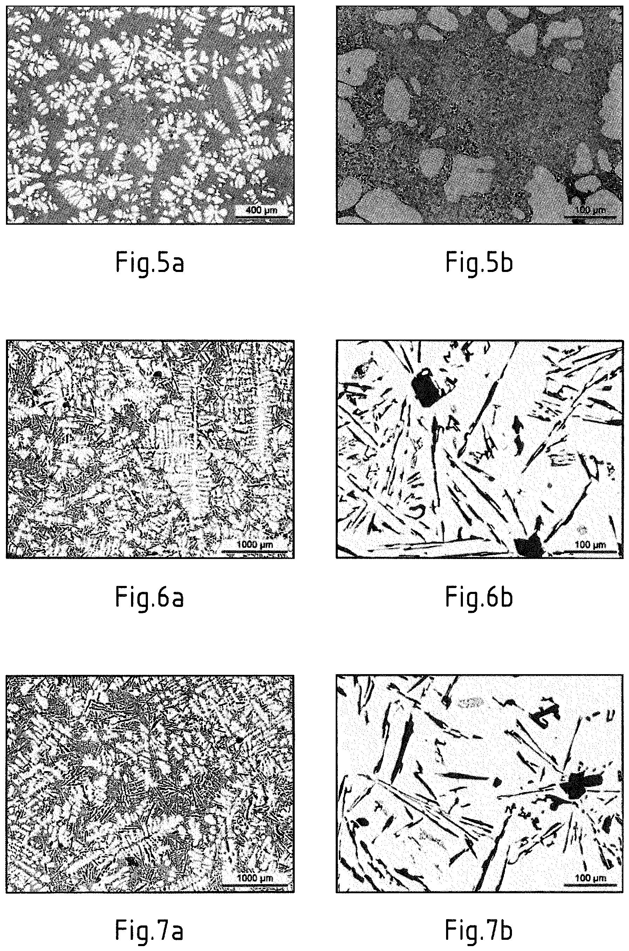

Die Zugabe von 300 ppm Bor ergab bei der Versuchslegierung V4 einen Borgehalt von 270 ppm in der Gussprobe. Die Schliffbilder der Fig. 5 a) und b) der Versuchslegierung V4 zeigen kurze verzweigte Dendriten und keine Si-Primärpartikel im Gegensatz zur Legierung V3. Zudem konnten feine Agglomerate an AlB-Partikeln ermittelt werden (Kreis in Fig. 5 b)). Das Verhältnis von Bor zu der Summe der Legierungsbestandteile von Ti, Zr, V und Cr betrug 5,19. Die Aluminiumlegierung aus Versuch V4 zeigte ein sehr feines Gefüge und eignet sich damit sehr gut für dünne Aluminiumlotschichten..

In Fig. 6 a) und b) sind wiederum die Schliffbilder einer Vergleichslegierung V5 dargestellt, welche keine Borzugabe aufweist und damit einen B-Gehalt von nur 6 ppm aufweist. Deutlich sind im Schliffbild b) Si-Primärpartikel in einer Größenordnung von etwa 50 bis 60 µm zu erkennen. Ferner sind lange dendritische Strukturen im Schliffbild zu erkennen sowie ein grobes Korngefüge.

Das AlSi-Eutektikum der Versuchslegierung V6 zeigt in den in Fig. 7 a) und b) dargestellten Schliffbildern weiterhin lange, unverzweigte Dendriten sowie einzelne Si-Primärpartikel mit einer Größe von etwa 60 µm. Es zeigt sich, dass ein Borgehalt von etwa 84 ppm nicht ausreicht, um eine signifikante Verkleinerung der Primärpartikel und eine Reduzierung der Anzahl der Partikel zu erreichen. Gleichzeitig ist bei einem Borgehalt von 84 ppm der Effekt auf die Kornfeinung relativ gering, so dass ein grobes Korngefüge vorliegt.

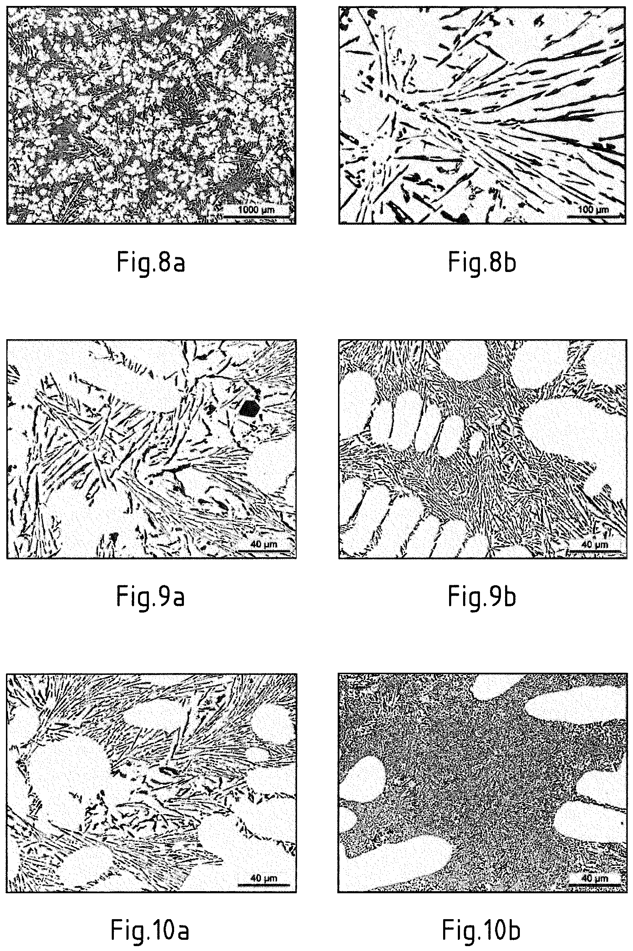

Die Aluminiumlegierung V7 des Ausführungsbeispiels aus Fig. 8 hat nach Borzugabe einen B-Gehalt von 355 ppm. Das Verhältnis des Borgehalts zur Summe der Gehalte an Ti, Zr, V und Cr beträgt 27,31 und ist besonders groß. Das AlSi-Eutektikum ist, wie Fig. 8b) zeigt, lamellenartig ausgebildet und weist keine Si-Primärpartikel auf. Die Dendriten der Primäraluminiumphase sind kurz und verzweigt, Fig. 8 a). Die Korngröße ist gegenüber geringeren Borgehalten weiter verringert. Die Aluminiumlegierung V7 eignet sich aufgrund der geringen Korngröße und der fehlenden Si-Primärpartikel ebenfalls gut für die Herstellung von Aluminiumlotprodukten, welche eine sehr dünne Aluminiumlotschicht aufweisen. Fig. 9 und Fig. 10 zeigen Schliffbilder der Aluminiumlegierungen gemäß Versuch Nr. V8 und Nr. V9. Die Schliffbilder sind stärker vergrößert und zeigen in Fig. 9 a) bzw. 10 a) jeweils einen Bereich mit einer gröberen Ausbildung des AlSi-Eutektikums und einen Bereich mit feinem AlSi-Eutektikum in Fig. 9 b) und Fig. 10 b).

Fig. 9 zeigt Schliffbilder einer Referenzlegierung V8, welcher kein Bor zulegiert wurde. Der Borgehalt beträgt 29 ppm. Die Schliffbilder zeigen deutlich, dass Si-Primärpartikel von 30 µm im Gefüge vorhanden sind. Es wurden zahlreiche Si-Primärpartikel detektiert. Die Dendriten sind sehr lang und deuten auf Korngrößen im Bereich von 2 bis 3 mm hin. Das AlSi-Eutektikum ist ebenfalls grob ausgebildet.

Im Gegensatz dazu zeigt Fig. 10 eine deutliche Veränderung des Gefüges aufgrund der Zugabe von Bor in der Versuchslegierung Nr. V9. Das Fehlen von Si-Primärpartikeln, die Ausbildung einer geringen Korngröße und eine lamellenartige Ausbildung des AlSi-Eutektikums werden auf den Borgehalt der Aluminiumlegierung von 690 ppm zurückgeführt. Die primären alpha-Aluminiumphasen sind ebenfalls als verzweigte, kurze Dendriten zu erkennen, so dass von einer sehr guten Eignung der Aluminiumlegierung V9 für besonders dünne Aluminiumlotschichten ausgegangen werden kann. Das feinere Korngefüge gewährleistet eine verbesserte Umformbarkeit eines mit einer entsprechenden Aluminiumlot beschichteten Aluminiumlegierungsproduktes. Während das Fehlen der Si-Primärpartikel ein "Durchbrennen" aufgrund der Ausbildung eines lokalen AlSi-Eutektikums beim Lötvorgang verhindert.

Das Verhältnis des Borgehaltes zur Summe der Gehalte von Ti, Zr, V und Cr liegt bei diesem Ausführungsbeispiel bei 10,78. Durch Einstellen eines Verhältnisses des Borgehaltes zur Summe der Gehalte Ti, Zr, V und Cr auf mindestens 1, mindestens 1,5, besonders bevorzugt auf mindestens 2,5 oder mindestens 3 kann die Produktionssicherheit bei der Herstellung der Legierung in Bezug auf die Eigenschaften Vorhandensein von Si-Primärpartikeln gesteigert werden, da hierdurch sichergestellt werden kann, dass der Effekt der Borzugabe nicht durch die Entstehung von Boriden und deren Absetzen im Ofen gestört wird. Das Verhältnis kann bevorzugt auch auf Werte von mehr als 5, 10 oder 20 steigen, wie die Ausführungsbeispiele zeigen.

## Patentansprüche

1. Barren zur Herstellung eines Aluminiumlegierungsprodukts durch Walzen bestehend aus einer Aluminiumlotlegierung mit folgenden Anteilen als Legierungsbestandteile in Gewichtsprozent:
| | | |
|---|---|---|
| 4,5 % ≤ | Si | ≤ 12 %, |
und optional mit einem oder mehreren der folgenden Anteile als Legierungsbestandteile in Gewichtsprozent:
| | |
|---|---|
| Ti | ≤ 0,2 %, |
| Fe | ≤ 0,8 %, |
| Cu | ≤ 0,3 %, |
| Mn | ≤ 0,10 %, |
| Mg | ≤ 2,0 %, |
| Zn | ≤ 0,20 %, |
| Cr | ≤ 0,05 %, |
Rest Aluminium und unvermeidbare Verunreinigungen, einzeln maximal 0,05 Gew.-%, in Summe maximal 0,15 Gew.-%,
**dadurch gekennzeichnet, dass**
zusätzlich Bor als Legierungsbestandteil vorgesehen ist, wobei Bor derart zulegiert ist, dass der Bor-Gehalt mindestens 100 ppm beträgt und die Aluminiumlegierung frei von primären Si-Partikeln mit einer Größe von mehr als 20 µm, insbesondere 10 µm, ist.

2. Barren nach Anspruch 1,
**dadurch gekennzeichnet, dass**
die Aluminiumlegierung folgenden Si-Gehalt aufweist:
| | | |
|---|---|---|
| 6 % ≤ | Si | ≤ 11 %. |

3. Barren nach Anspruch 1 oder 2,
**dadurch gekennzeichnet, dass**
der Bor-Gehalt ≥ 140 ppm, vorzugsweise ≥ 220 ppm, und/oder ≤ 1000 ppm, vorzugsweise ≤ 800 ppm, beträgt.

4. Barren nach einem der Ansprüche 1 bis 3,
**dadurch gekennzeichnet, dass**
Bor in Abhängigkeit eines oder mehrerer anderer Legierungsbestandteile zulegiert ist.

5. Barren nach einem der Ansprüche 1 bis 4,
**dadurch gekennzeichnet, dass**
Bor in Abhängigkeit des Ti-, Zr- und/oder V-Gehalts zulegiert ist, insbesondere derart, dass der Bor-Gehalt mindestens der 1-fachen, der 1,5-fachen, der 2,5-fachen oder mindestens der 3-fachen Menge der Summe des Ti-, Zr- und V und Cr-Gehalts entspricht.

6. Barren nach einem der Ansprüche 1 bis 5,
**dadurch gekennzeichnet, dass**
die Aluminiumlotlegierung eine Zusammensetzung vom Aluminiumlegierungstyp AA 4043, AA 4343, AA 4045, AA 4044 oder AA 4104 aufweist.

7. Barren nach einem der Ansprüche 1 bis 6,
**dadurch gekennzeichnet, dass**
die Aluminiumlotlegierung einen Phosphorgehalt von maximal 30 ppm, maximal 20 ppm oder maximal 10 ppm aufweist.

8. Aluminiumlegierungsprodukt hergestellt aus einem Barren nach einem der Ansprüche 1 bis 7 durch Walzen des Barrens.

9. Aluminiumlegierungsprodukt nach Anspruch 8,
**dadurch gekennzeichnet, dass**
das Aluminiumlegierungsprodukt als Plattierblech oder Lötfolie ausgebildet ist.

10. Aluminiumlegierungsprodukt,
zumindest teilweise bestehend aus einer Aluminiumlotlegierung mit folgenden Anteilen als Legierungsbestandteile in Gewichtsprozent:
| | | |
|---|---|---|
| 4,5 % ≤ | Si | ≤ 12 %, |
und optional mit einem oder mehreren der folgenden Anteile als Legierungsbestandteile in Gewichtsprozent:
| | |
|---|---|
| Ti | ≤ 0,2 %, |
| Fe | ≤ 0,8 %, |
| Cu | ≤ 0,3 %, |
| Mn | ≤ 0,10 %, |
| Mg | ≤ 2,0 %, |
| Zn | ≤ 0,20 %, |
| Cr | ≤ 0,05 %, |
Rest Aluminium und unvermeidbare Verunreinigungen, einzeln maximal 0,05 Gew.-%, in Summe maximal 0,15 Gew.-%,
**dadurch gekennzeichnet, dass**
zusätzlich Bor als Legierungsbestandteil vorgesehen ist, wobei Bor derart zulegiert ist, dass der Bor-Gehalt mindestens 100 ppm beträgt und die Aluminiumlegierung frei von primären Si-Partikeln mit einer Größe von mehr als 20 µm, insbesondere 10 µm, ist und
das Aluminiumlegierungsprodukt ein Band ist und mindestens eine weitere Schicht aus Aluminium oder einer weiteren Aluminiumlegierung aufweist.

11. Aluminiumlegierungsprodukt nach Anspruch 10,
**dadurch gekennzeichnet, dass**
das Band durch Walzplattieren oder ein Verbundgießen hergestellt ist.

12. Aluminiumlegierungsprodukt nach einem der Ansprüche 10 oder 11,
**dadurch gekennzeichnet, dass**
das Aluminiumlegierungsprodukt zumindest als ein Teil eines gelöteten Bauteils, insbesondere eines Wärmetauschers ausgebildet ist.

13. Verfahren zur Herstellung eines Barrens aus einer Aluminiumlotlegierung, wobei der Barren zur Herstellung eines Aluminiumlegierungsproduktes durch Walzen verwendbar ist, bei welchem
- Reinaluminium mit unvermeidbaren Verunreinigungen einzeln maximal 0,05 Gew.-%, in Summe maximal 0,15 Gew.-% in einem Schmelzofen geschmolzen wird,
- optional eins oder mehrere der folgenden Anteile
| | |
|---|---|
| Ti | ≤ 0,2 %, |
| Fe | ≤ 0,8 %, |
| Cu | ≤ 0,3 %, |
| Mn | ≤ 0,10 %, |
| Mg | ≤ 2,0 %, |
| Zn | ≤ 0,20 %, |
| Cr | ≤ 0,05 %, |
als weitere Legierungsbestandteile in Gewichtsprozent im Schmelzofen zulegiert werden oder bereits zumindest teilweise im Reinaluminium enthalten sind,
- im Schmelzofen Silizium zulegiert wird bis ein Si-Gehalt von 4,5 Gew.-% bis 12 Gew.-% der Aluminiumlegierung erreicht ist,
- wobei Bor derart zulegiert wird, dass der Bor-Gehalt mindestens 100 ppm beträgt und die erstarrte Aluminiumlegierung frei von primären Si-Partikeln mit einer Größe von mehr als 20 µm, insbesondere 10 µm, ist und
- ein Barren gegossen wird.

14. Verfahren nach Anspruch 13,
**dadurch gekennzeichnet, dass**
auf die Zugabe weiterer Kornfeinungsmittel, insbesondere Titanboride aufweisende Kornfeinungsmittel, verzichtet wird.

15. Verfahren nach Anspruch 13 oder 14,
**dadurch gekennzeichnet, dass**
der B-Gehalt auf ≥ 100 ppm, vorzugsweise ≥ 220 ppm, und/oder ≤ 1000 ppm, vorzugsweise ≤ 800 ppm, eingestellt wird.

16. Verfahren nach einem der Ansprüche 13 bis 15,
**dadurch gekennzeichnet, dass**
Bor in Abhängigkeit des Ti-, Zr- und/oder V-Gehalts zulegiert wird, insbesondere derart, dass der B-Gehalt mindestens der 1-fachen, mindestens der 1,5-fachen, mindestens der 2,5-fachen oder mindestens der 3-fachen Menge der Summe des Ti-, Zr- und V-Gehalts der Ausgangsschmelze entspricht.

17. Verfahren nach einem der Ansprüche 13 bis 16,
**dadurch gekennzeichnet, dass**
eine Aluminiumlotlegierung vom Typ AA4xxx, AA 4043, AA 4343, AA 4045, AA 4044 oder AA 4104 hergestellt wird.

18. Verfahren nach einem der Ansprüche 13 bis 17,
**dadurch gekennzeichnet, dass**
die Aluminiumlotlegierung einen Phosphorgehalt von maximal 30 ppm, maximal 20 ppm oder maximal 10 ppm aufweist.

19. Plattierblech hergestellt aus einem Barren nach Patentanspruch 1 bis 7,
**dadurch gekennzeichnet, dass**
das Plattierblech aus dem Barren gesägt ist.

## Claims

1. Ingot for producing an aluminium alloy product by rolling consisting of an aluminium solder alloy having the following proportions as alloying constituents in percent by weight:
| | | |
|---|---|---|
| 4,5 % ≤ | Si | ≤ 12 % |
and optionally one or more of the following proportions as alloying constituents in percent by weight:
| | |
|---|---|
| Ti | ≤ 0.2 %, |
| Fe | ≤ 0.8 %, |
| Cu | ≤ 0.3 %, |
| Mn | ≤ 0.10 %, |
| Mg | ≤ 2.0 %, |
| Zn | ≤ 0.20 %, |
| Cr | ≤ 0.05 %, |
with the remainder aluminium and unavoidable impurities, individually at most 0.05 wt%, in total at most 0.15 wt%,
**characterised in that**
boron is additionally provided as an alloying constituent, wherein boron is added to the alloy such that the boron content is at least 100 ppm and the aluminium alloy is free from primary Si particles having a size of more than 20 µm, in particular 10 µm.

2. Ingot according to claim 1,
**characterised in that**
the aluminium alloy has the following Si content:
| | | |
|---|---|---|
| 6 % ≤ | Si | ≤ 11 % |

3. Ingot according to claim 1 or 2, **characterised in that** the boron content is ≥ 140 ppm, preferably ≥ 220 ppm, and/or ≤ 1000 ppm, preferably ≤ 800 ppm.

4. Ingot according to any one of claims 1 to 3,
**characterised in that**
boron is added to the alloy dependent on one or more other alloying constituents.

5. Ingot according to any one of claims 1 to 4,
**characterised in that**
boron is added to the alloy dependent on the Ti, Zr and/or V contents, in particular in such a way that the boron content is at least 1 times, 1.5 times, 2.5 times or to at least 3 times the amount of the sum of the Ti, Zr and V and Cr contents.

6. Ingot according to any one of claims 1 to 5,
**characterised in that**
the aluminium solder alloy is composed of the aluminium alloy type AA 4043, AA 4343, AA 4045, AA 4044 or AA 4104.

7. Ingot according to any one of claims 1 to 6,
**characterised in that**
the aluminium solder alloy has a phosphorus content of at most 30 ppm, of at most 20 ppm or of at most 10 ppm.

8. Aluminium alloy product produced from an ingot according to any one of claims 1 to 7 by rolling the ingot.

9. Aluminium alloy product according to claim 8,
**characterised in that**
the aluminium alloy product is formed as a cladding sheet or soldering foil.

10. Aluminium alloy product,
at least partly consisting of an aluminium solder alloy having the following proportions as alloying constituents in percent by weight:
| | | |
|---|---|---|
| 4,5 % ≤ | Si | ≤ 12 % |
and optionally one or more of the following proportions as alloying constituents in percent by weight:
| | |
|---|---|
| Ti | ≤ 0.2 %, |
| Fe | ≤ 0.8 %, |
| Cu | ≤ 0.3 %, |
| Mn | ≤ 0.10 %, |
| Mg | ≤ 2.0 %, |
| Zn | ≤ 0.20 %, |
| Cr | ≤ 0.05 %, |
with the remainder aluminium and unavoidable impurities, individually at most 0.05 wt%, in total at most 0.15 wt%,
**characterised in that**
boron is additionally provided as an alloying constituent, wherein boron is added to the alloy such that the boron content is at least 100 ppm and the aluminium alloy is free from primary Si particles having a size of more than 20 µm, in particular 10 µm, and the aluminium alloy product is a strip and has at least one further layer consisting of aluminium or of another aluminium alloy.

11. Aluminium alloy product according to claim 10,
**characterised in that**
the strip is produced by roll cladding or composite casting.

12. Aluminium alloy product according to either of claims 10 and 11,
**characterised in that**
the aluminium alloy product is formed at least as one part of a soldered component, in particular of a heat exchanger.

13. Method for producing an ingot consisting of an aluminium solder alloy, wherein the ingot is usable for the production of an aluminium alloy product by rolling, in which
- pure aluminium with unavoidable impurities, individually at most 0.05 wt%, in total at most 0.15 wt%, is melted in a melting furnace,
- optionally one or more of the following proportions
| | |
|---|---|
| Ti | ≤ 0.2 %, |
| Fe | ≤ 0.8 %, |
| Cu | ≤ 0.3 %, |
| Mn | ≤ 0.10 %, |
| Mg | ≤ 2.0 %, |
| Zn | ≤ 0.20 %, |
| Cr | ≤ 0.05 %, |
are added to the alloy as further alloying constituents in percent by weight in the melting furnace or are already at least partially contained in the pure aluminium,
- silicon is added to the alloy in the melting furnace until an Si content of 4.5 wt% to 12 wt% of the aluminium alloy has been reached,
- wherein boron is added to the alloy such that the boron content is at least 100 ppm and the solidified aluminium alloy is free from primary Si particles having a size of more than 20 µm, in particular 10 µm, and
- an ingot is cast.

14. Method according to claim 13,
**characterised in that**
the addition of further grain refiners, in particular grain refiners having titanium borides, is dispensed with.

15. Method according to claim 13 or 14,
**characterised in that**
the B content is set to ≥ 100 ppm, preferably ≥ 220 ppm, and/or ≤ 1000 ppm, preferably ≤ 800 ppm.

16. Method according to any one of claims 13 to 15,
**characterised in that**
boron is added to the alloy dependent on the Ti, Zr and/or V contents, in particular in such a way that the B content corresponds to at least 1 times, at least 1.5 times, at least 2.5 times or at least 3 times the amount of the sum of the Ti, Zr and V contents of the starting melt.

17. Method according to any one of claims 13 to 16,
**characterised in that**
an aluminium solder alloy is produced from the type AA4xxx, AA 4043, AA 4343, AA 4045, AA 4044 or AA 4104.

18. Method according to any one of claims 13 to 17,
**characterised in that**
the aluminium solder alloy has a phosphorus content of at most 30 ppm, of at most 20 ppm or of at most 10 ppm.

19. Cladding sheet produced from an ingot according to any one of claims 1 to 7,
**characterised in that**
the cladding sheet is sawed from the ingot.

## Revendications

1. Lingot pour la fabrication d'un produit en alliage d'aluminium par laminage, composé d'un alliage de soudure d'aluminium avec les proportions suivantes de composants d'alliage, en pourcentage du poids:
| | | |
|---|---|---|
| 4,5 % ≤ | Si | ≤ 12 %, |
et facultativement avec une ou plusieurs des proportions suivantes de composants d'alliage en pourcentage du poids:
| | |
|---|---|
| Ti | ≤ 0,2 %, |
| Fe | ≤ 0,8 %, |
| Cu | ≤ 0,3 %, |
| Mn | ≤ 0,10 %, |
| Mg | ≤ 2,0 %, |
| Zn | ≤ 0,20 %, |
| Cr | ≤ 0,05 %, |
le reste étant composé d'aluminium et d'impuretés inévitables, représentant individuellement au maximum 0,05 % en poids et au total, au maximum 0,15 % en poids,
**caractérisé en ce qu'**
en plus, du bore est prévu en tant que composant d'alliage, dans lequel le bore est ajouté en alliage de telle manière que la teneur en bore s'élève au moins à 100 ppm et l'alliage d'aluminium est exempt de particules primaires de Si d'une taille supérieure à 20 µm, en particulier 10 µm.

2. Lingot conforme à la revendication 1,
**caractérisé en ce que**
l'alliage d'aluminium présente la teneur suivante en Si :
| | | |
|---|---|---|
| 6 % ≤ | Si | ≤ 11 %. |

3. Lingot conforme à la revendication 1 ou 2,
**caractérisé en ce que**
la teneur en bore s'élève à ≥ 140 ppm, de préférence ≥ 220 ppm, et/ou ≤ 1000 ppm, de préférence ≤ 800 ppm.

4. Lingot conforme à l'une des revendications 1 à 3,
**caractérisé en ce que**
le bore est ajouté en alliage en fonction d'un ou plusieurs autres composants d'alliage.

5. Lingot conforme à l'une des revendications 1 à 4,
**caractérisé en ce que**
le bore est ajouté en alliage en fonction de la teneur en Ti, Zr et/ou V, en particulier de telle manière que la teneur en bore corresponde à au moins 1 fois, 1,5 fois, 2,5 fois ou au moins 3 fois la somme des teneurs en Ti, Zr et V et Cr.

6. Lingot conforme à l'une des revendications 1 à 5,
**caractérisé en ce que**
l'alliage de soudure d'aluminium présente une composition des types d'alliage d'aluminium AA 4043, AA 4343, AA 4045, AA 4044 ou AA 4104.

7. Lingot conforme à l'une des revendications 1 à 6,
**caractérisé en ce que**
l'alliage de soudure d'aluminium présente une teneur en phosphore de 30 ppm maximum, 20 ppm maximum ou 10 ppm maximum.

8. Produit d'alliage d'aluminium fabriqué à partir d'un lingot conforme à l'une des revendications 1 à 7 par laminage du lingot.

9. Produit d'alliage d'aluminium conforme à la revendication 8,
**caractérisé en ce que**
le produit d'alliage d'aluminium est formé de tôle plaquée ou de feuille de soudure.

10. Produit d'alliage d'aluminium,
composé au moins partiellement d'un alliage de soudure d'aluminium avec les proportions suivantes de composants d'alliage en pourcentage du poids:
| | | |
|---|---|---|
| 4,5 % ≤ | Si | ≤ 12 %, |
et facultativement avec une ou plusieurs des proportions suivantes de composants d'alliage en pourcentage du poids:
| | |
|---|---|
| Ti | ≤ 0,2 %, |
| Fe | ≤ 0,8 %, |
| Cu | ≤ 0,3 %, |
| Mn | ≤ 0,10 %, |
| Mg | ≤ 2,0 %, |
| Zn | ≤ 0,20 %, |
| Cr | ≤ 0,05 %, |
le reste étant composé d'aluminium et d'impuretés inévitables, représentant individuellement au maximum 0,05 % en poids et au total, au maximum 0,15 % en poids,
**caractérisé en ce qu'**
en plus, du bore est prévu en tant que composant d'alliage, dans lequel le bore est ajouté en alliage de telle manière que la teneur en bore s'élève au moins à 100 ppm et l'alliage d'aluminium est exempt de particules primaires de Si d'une taille supérieure à 20 µm, en particulier 10 µm,
et le produit d'alliage d'aluminium est une bande et présente au moins une autre couche d'aluminium ou d'un autre alliage d'aluminium.

11. Produit d'alliage d'aluminium conforme à la revendication 10,
**caractérisé en ce que**
la bande est fabriquée par laminage ou par coulée composite.

12. Produit d'alliage d'aluminium conforme à l'une des revendications 10 ou 11,
**caractérisé en ce que**
le produit d'alliage d'aluminium est conçu comme au moins une partie d'un composant soudé, en particulier d'un échangeur thermique.

13. Procédé de fabrication d'un lingot à partir d'un alliage de soudure d'aluminium, dans lequel le lingot peut être utilisé pour la fabrication d'un produit d'alliage d'aluminium par laminage, dans lequel
- l'aluminium pur avec des impuretés inévitables représentant individuellement au maximum 0,05 % en poids, et au total, au maximum 0,15 % en poids, est fondu dans un four de fusion
- facultativement, une ou plusieurs des proportions suivantes
| | |
|---|---|
| Ti | ≤ 0,2 %, |
| Fe | ≤ 0,8 %, |
| Cu | ≤ 0,3 %, |
| Mn | ≤ 0,10 %, |
| Mg | ≤ 2,0 %, |
| Zn | ≤ 0,20 %, |
| Cr | ≤ 0,05 %, |
sont ajoutées en tant que composants d'alliage supplémentaires en pourcentage de poids dans le four de fusion ou sont déjà au moins partiellement présentes dans l'aluminium pur,
- du silicium est ajoutée en alliage dans le four à fusion jusqu'à atteindre une teneur en Si de 4,5 % à 12 % en poids de l'alliage d'aluminium,
- dans lequel le bore est ajouté en alliage de telle manière que la teneur en bore s'élève au moins à 100 ppm et l'alliage d'aluminium solidifié est exempt de particules primaires de Si d'une taille supérieure à 20 µm, en particulier 10 µm, et
- un lingot est coulé.

14. Procédé conforme à la revendication 13,
**caractérisé en ce qu'**il
n'y a pas d'ajout d'autres agents d'affinage des grains, en particulier des agents d'affinage des grains présentant du borure de titane.

15. Procédé conforme à la revendication 13 ou 14,
**caractérisé en ce que**
la teneur en B est établie à ≥ 100 ppm, de préférence ≥ 220 ppm, et/ou ≤ 1000 ppm, de préférence ≤ 800 ppm.

16. Procédé conforme à l'une des revendications 13 à 15,
**caractérisé en ce que**
le bore est ajouté en alliage en fonction de la teneur en Ti, Zr et/ou V, en particulier de telle manière que la teneur en B corresponde à au moins 1 fois, au moins 1,5 fois, au moins 2,5 fois ou au moins 3 fois la somme des teneurs en Ti, Zr et V de la fusion initiale.

17. Procédé conforme à l'une des revendications 13 à 16,
**caractérisé en ce qu'**un
alliage de soudure d'aluminium de type AA4xxx, AA4043, AA 4343, AA 4045, AA 4044 ou AA 4104 est fabriquée.

18. Procédé conforme à l'une des revendications 13 à 17,
**caractérisé en ce que**
l'alliage de soudure d'aluminium présente une teneur en phosphore de 30 ppm maximum, 20 ppm maximum ou 10 ppm maximum.

19. Tôle plaquée fabriquée à partir d'un lingot conforme à la revendication de brevet 1 à 7,
**caractérisé en ce que**
la tôle plaquée est sciée du lingot.
